# EUROPEAN PATENT APPLICATION

(11) **EP 4 793 302 A1**
(43) Date of publication of application: **19.08.2026**
(21) Application number: 25158305.0
(22) Date of filing: 17.02.2025
(51) Int. Cl.: C08G 18/24, C08G 18/32, C08G 18/48, C08G 18/63, C08G 18/66, C08G 18/76, F41J 3/00

(54) **ISOCYANATE-REACTIVE COMPOSITIONS THAT INCLUDE POLYMER-CERAMIC COMPOSITE PARTICLES, POLYURETHANE FOAMS FORMED THEREFROM, AND TARGETS THAT INCLUDE SUCH A FOAM**

(71) Applicant: Covestro LLC, Pittsburgh, PA 15205 (US)
(72) Inventor: KACH, Jeremy, Pittsburgh, 15224 (US); GLAZE, Amanda, Eighty Four, 15330 (US)
(74) Representative: Levpat

(57) **Abstract**

Fluoropolymer-free isocyanate-reactive compositions that include a polyether polyol, particles dispersed in the polyether polyol, and water. The particles dispersed in the polyether polyol include polymeric particles, and polymer-ceramic composite particles. Polyurethane foams produced using such isocyanate-reactive compositions. Also described are targets that include a cover and a foam core enclosed by the cover. The foam core does not include any fluoropolymer and includes polymeric particles and polymer-ceramic particles.

## Description

### FIELD

This specification pertains generally to isocyanate-reactive compositions, polyurethane foam-forming compositions, polyurethane foams, and methods for their production. This specification also pertains generally to targets that include such a foam. The compositions and foams include polymeric particles and polymer-ceramic composite particles.

### BACKGROUND

Archery targets are sometimes constructed using a foam, such as polyurethane foam. The foam may have target markings formed directly on the foam or the foam may be a core that is enclosed by a cover with target markings formed on the cover. The polyurethane foam must exhibit sufficient rigidity and dimensional stability such that when hit by a projectile, such as an arrow, it can stop the projectile while retaining its overall shape. In addition, the foam must exhibit self-healing properties so that it can be repeatedly used as a target. Such self-healing properties have been attainable in polyurethane foam target backing through use of a polymer polyol ("PMPO") in the composition used to produce the foam.

Foam target backings must also exhibit good slip properties to allow a projectile, such as an arrow, that has penetrated the target to be relatively easily removed. Historically, fluoropolymer, such as polytetrafluoroethylene ("PTFE"), additive particles have been included in the foam to provide such slip properties. The use of fluoropolymers has, however, become disfavored.

In view of the foregoing, it would be desirable to provide foams that do not include any fluoropolymers, but exhibit slip properties comparable to foams that utilize such fluoropolymers and while retaining other properties, such as self-healing properties, that make them particularly suitable for use as a foam target backing material.

### SUMMARY

In certain respects, the present disclosure is directed to isocyanate-reactive compositions. The isocyanate-reactive compositions comprise: (a) a polyether polyol having a functionality of 2 to 8, an OH number of 20 to 400 mg KOH/g, and a poly(oxyethylene) content of 0 to 50% by weight, based on total weight of the polyether polyol (a); (b) particles dispersed in the polyether polyol; and (c) water. The particles dispersed in the polyether polyol comprise (i) polymeric particles, and (ii) polymer-ceramic composite particles. The isocyanate-reactive compositions do not include any fluoropolymer.

In other respects, this disclosure relates to foam-forming compositions that include such isocyanate-reactive compositions, polyurethane foams produced from such foam-forming compositions, and methods for producing such polyurethane foam.

In still other respects, this disclosure relates to a target. The target can comprise a foam having target markings formed directly on the foam or the target can comprise (a) a cover having target markings formed thereon; and (b) a foam core that is enclosed by the cover. In either case, the foam comprises: (i) polymeric particles; and (ii) polymer-ceramic composite particles and the foam does not include any fluoropolymer.

### BRIEF DESCRIPTION OF THE DRAWINGS

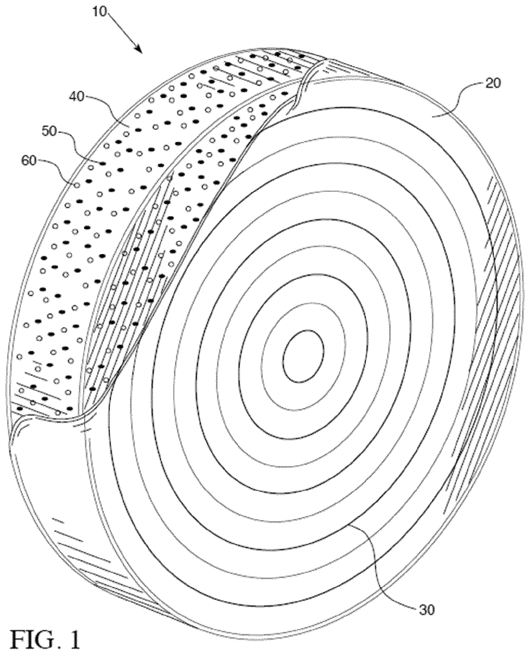

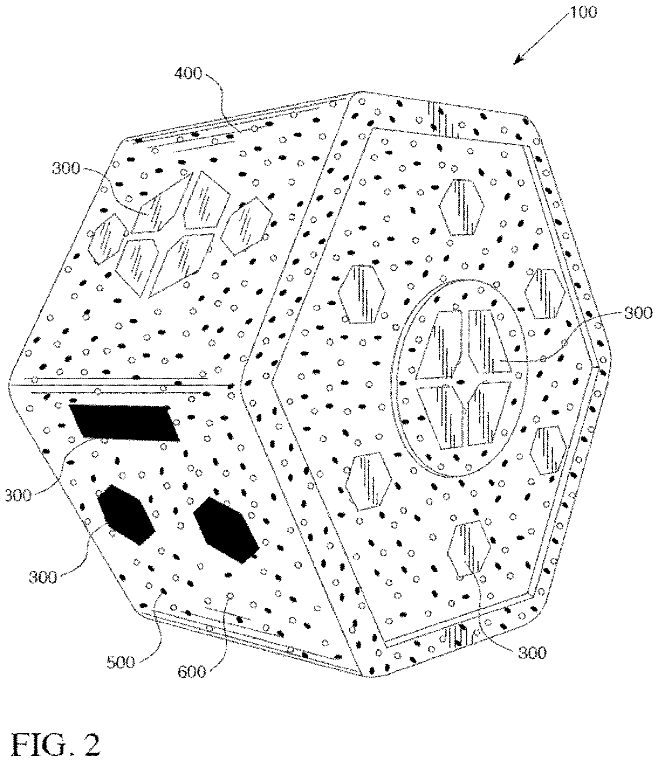

Various features and characteristics of the inventions described in this specification may be better understood by reference to the accompanying Figs. 1 and 2 that are perspective illustrations of an archery target according to certain implementations.

### DETAILED DESCRIPTION

Various embodiments are described and illustrated in this specification to provide an overall understanding of the structure, function, properties, and use of the disclosed inventions. It is understood that the various embodiments described and illustrated in this specification are non-limiting and non-exhaustive. Thus, the invention is not limited by the description of the various non-limiting and non-exhaustive embodiments disclosed in this specification. The features and characteristics described in connection with various embodiments may be combined with the features and characteristics of other embodiments. Such modifications and variations are intended to be included within the scope of this specification. As such, the claims may be amended to recite any features or characteristics expressly or inherently described in, or otherwise expressly or inherently supported by, this specification. Further, Applicant reserves the right to amend the claims to affirmatively disclaim features or characteristics that may be present in the prior art. Therefore, any such amendments comply with the requirements of 35 U.S.C. § 112 and 35 U.S.C. § 132(a). The various embodiments disclosed and described in this specification can comprise, consist of, or consist essentially of the features and characteristics as variously described herein.

Any patent, publication, or other disclosure material identified herein is incorporated by reference into this specification in its entirety unless otherwise indicated, but only to the extent that the incorporated material does not conflict with existing definitions, statements, or other disclosure material expressly set forth in this specification. As such, and to the extent necessary, the express disclosure as set forth in this specification supersedes any conflicting material incorporated by reference herein. Any material, or portion thereof, that is said to be incorporated by reference into this specification, but which conflicts with existing definitions, statements, or other disclosure material set forth herein, is only incorporated to the extent that no conflict arises between that incorporated material and the existing disclosure material. Applicant reserves the right to amend this specification to expressly recite any subject matter, or portion thereof, incorporated by reference herein.

In this specification, other than where otherwise indicated, all numerical parameters are to be understood as being prefaced and modified in all instances by the term "about", in which the numerical parameters possess the inherent variability characteristic of the underlying measurement techniques used to determine the numerical value of the parameter. At the very least, and not as an attempt to limit the application of the doctrine of equivalents to the scope of the claims, each numerical parameter described in the present description should at least be construed in light of the number of reported significant digits and by applying ordinary rounding techniques.

Also, any numerical range recited in this specification is intended to include all sub-ranges of the same numerical precision subsumed within the recited range. For example, a range of "1.0 to 10.0" is intended to include all sub-ranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited in this specification is intended to include all lower numerical limitations subsumed therein and any minimum numerical limitation recited in this specification is intended to include all higher numerical limitations subsumed therein. Accordingly, Applicant(s) reserves the right to amend this specification, including the claims, to expressly recite any sub-range subsumed within the ranges expressly recited herein. All such ranges are intended to be inherently described in this specification such that amending to expressly recite any such sub-ranges would comply with the requirements of 35 U.S.C. § 112 and 35 U.S.C. § 132(a).

The grammatical articles "one", "a", "an", and "the", as used in this specification, are intended to include "at least one" or "one or more", unless otherwise indicated. Thus, the articles are used in this specification to refer to one or more than one (i.e., to "at least one") of the grammatical objects of the article. By way of example, "a component" means one or more components, and thus, possibly, more than one component is contemplated and may be employed or used in an implementation of the described embodiments. Further, the use of a singular noun includes the plural, and the use of a plural noun includes the singular, unless the context of the usage requires otherwise.

As used herein, the term "functionality" refers to the average number of reactive hydroxyl groups, -OH, present per molecule of the polyol or polyol blend that is being described. In the production of polyurethane foams, hydroxyl groups react with isocyanate groups, -NCO, that are attached to a polyisocyanate. As used herein, the terms "hydroxyl number" and "OH number" refer to the number of reactive hydroxyl groups available for reaction and are expressed as the number of milligrams of potassium hydroxide equivalent to the hydroxyl content of one gram of the polyol (ASTM D4274-16). The term "equivalent weight" refers to the weight of a compound divided by its valence. For a polyol, the equivalent weight is calculated by dividing the molecular weight of the polyol by its functionality or is calculated by dividing 56,100 by the hydroxyl number of the polyol - Equivalent Weight (g/eq) = (56.1 x 1000)/OH number.

As indicated earlier, some implementations of this specification relate to isocyanate-reactive compositions that include a polyether polyol and particles dispersed in the polyether polyol, in which the particles comprise polymeric particles. In some cases, such a dispersion of polymeric particles in a polyether polyol is introduced to the isocyanate-reactive composition in the form of a filled polyol. As used herein, the term "polymeric particles" refers to solid particles consisting exclusively of a polymer and, as a result, are to be distinguished from the polymer-ceramic composite particles described in this specification.

As used herein, the term "filled polyol" refers to a dispersion of polymeric particles in a liquid carrier polyol (sometimes referred to as a "base" polyol). In some embodiments, the filled polyol has a solids content, *i.e.,* content of polymeric particles, of 20% by weight to 75% by weight, such as 20% by weight to 70% by weight, 20% by weight to 60% by weight, 20% by weight to 40% by weight, or 20% by weight to 30% by weight, based on the total weight of the filled polyol. Moreover, in certain implementations, the filled polyol has a viscosity (in in millipascal-seconds (mPa+s) measured at 25°C on an Anton Paar SVM3000 viscometer) of less than 50,000 mPa.s, such as less than 40,000 mPa+s, less than 30,000 mPa+s, less than 20,000 mPa.s or, in some cases, less than 10,000 mPa.s, less than 5,000 mPa·s, 1,000 to 5,000 mPa·s, or 1,000 to 3,000 mPa·s.

Specific examples of suitable filled polyols include polyisocyanate polyaddition ("PIPA") polyols, polyurea and/or polyhydrazodicarbonamide ("PHD") polyols, and polymer polyols ("PMPOs"). PHD polyols can be produced by in-situ polymerization of an isocyanate or an isocyanate mixture with a diamine and/or hydrazine (or hydrazine hydrate) in a polyol, such as a polyether polyol, such as by the reaction of an isocyanate mixture of 75% to 85% by weight of 2,4-tolylene diisocyanate (2,4-TDI) and 15% to 25% by weight of 2,6-tolylene diisocyanate (2,6-TDI) with a diamine and/or hydrazine hydrate in a polyether polyol produced by alkoxylation of a trifunctional starter (for example glycerol and/or trimethylolpropane). Processes for producing PHD dispersions are described for example in U.S. Patent Nos. 4,089,835 and 4,260,530, which are incorporated herein by reference. PIPA polyols are polyether polyols modified with alkanolamines by polyisocyanate polyaddition, where the polyether polyol has a functionality of 2.5 to 4.0 and a hydroxyl number of 3 mg KOH/g to 112 mg KOH/g. PIPA polyols are described in detail in GB 2 072 204 A, DE 31 03 757 A1 and U.S. Patent No. 4,374,209 A, which are incorporated herein by reference.

In some implementations, however, the filled polyol comprises a PMPO. More specifically, in these implementations, the polymeric particles of the filled polyol comprise a polymer comprising the free radical polymerization reaction product of an ethylenically unsaturated monomer composition. In some of these embodiments, the filled polyol comprises a reaction product of a reaction mixture comprising: (a) a carrier polyol; (b) an ethylenically unsaturated monomer, (c) a preformed stabilizer, (d) a free radical initiator, and, (e) optionally, a polymer control agent. As used herein, "monomer" means the simple unpolymerized form of a chemical compound having relatively low molecular weight, e.g., acrylonitrile, styrene, methyl methacrylate, and the like. As used herein, "polymerizable ethylenically unsaturated monomer" means a monomer containing ethylenic unsaturation (C=C, i.e., two double bonded carbon atoms) that is capable of undergoing free radically induced addition polymerization reactions. As used herein, "preformed stabilizer" means an intermediate obtained by reacting a macromer containing reactive unsaturation (e.g. acrylate, methacrylate, maleate, etc.) with one or more monomers (i.e. acrylonitrile, styrene, methyl methacrylate, etc.), with and at least one free radical initiator, in the presence of a polymer control agent (PCA) and, optionally, in a diluent.

In certain embodiments, the carrier polyol of the filled polyol comprises a polyether polyol having a functionality of 2 to 8, an OH number of 20 to 400 mg KOH/g, and a poly(oxyethylene) content of 0 to 50% by weight, based on total weight of the polyether polyol. More specifically, in some implementations, such carrier polyol has a functionality of 2 to 6, 2 to 4, 2.5 to 3.5, or, in some cases, 2.8 to 3.2. In addition, in some implementations, such carrier polyol has an OH number of 20 to 100 mg KOH/g, 20 to 50 mg KOH/g, 25 to 50 mg KOH/g, or 30 to 50 mg KOH/g. Also, in some implementations, such carrier polyol has a poly(oxyethylene) content of 1 to 40% by weight, 1 to 30% by weight, 10 to 30% by weight, or 10 to 20% by weight, based on the total weight of the polyether polyol. In addition, in some cases, the foregoing polyether polyol has more than 50 mol%, such as 70 to 90 mol% or 70 to 80 mol%, of primary OH groups.

Specific examples of suitable such polyether polyols include alkylene oxide addition products of starter compounds with Zerewitinoff-active hydrogen atoms. Suitable starter compounds with Zerewitinoff-active hydrogen atoms which are used for the production of such polyether polyols often have a hydroxyl functionality of 2 to 8, 2 to 6, 2 to 4, or, in some cases, 3. Specific examples of suitable hydroxy-functional starter compounds are propylene glycol, ethylene glycol, diethylene glycol, dipropylene glycol, 1,2-butanediol, 1,3-butanediol, 1,4-butanediol, hexanediol, pentanediol, 3-methyl-1,5-pentanediol, 1,12-dodecanediol, glycerol, trimethylolpropane, triethanolamine, pentaerythritol, sorbitol, sucrose, hydro-quinone, pyrocatechol, resorcinol, bisphenol F, bisphenol A, 1,3,5-trihydroxybenzene, and condensation products of formaldehyde and phenol or melamine or urea which contain methylol groups. Specific examples of alkylene oxides suitable for preparing such polyether polyols include ethylene oxide ("EO"), propylene oxide ("PO"), 1,2-butylene-oxide or 2,3-butylene oxide and styrene oxide. In some cases, propylene oxide and ethylene oxide are introduced into the reaction mixture individually, in a mixture or successively. If the alkylene oxides are metered in successively, the resulting products contain polyether chains with block structures. Products with ethylene oxide blocks are characterized by increased concentrations of primary end groups. The alkoxylation reaction may be catalyzed using any conventional catalyst including, for example, potassium hydroxide (KOH) or a double metal cyanide (DMC) catalyst.

In some implementations, the foregoing carrier polyol is present in an amount of at least 50% by weight, such as at least 70% by weight, at least 80% by weight, or at least 90% by weight, based on the total weight of carrier polyol. In some implementations, the foregoing carrier polyol is the only carrier polyol used in the filled polyol.

As will be appreciated, however, the filled polyol may, if desired, include other carrier polyols different from the carrier polyol described above. Suitable additional carrier polyols include, for example, other polyether polyols having a functionality of 2 to 8, 2 to 6, or 3 to 6, and an OH number of 20 to 400 mg KOH/g, 20 to 200 mg KOH/g, 20 to 150 mg KOH/g, 20 to 100 mg KOH/g, 20 to 50 mg KOH/g, 25 to 50 mg KOH/g, or 30 to 50 mg KOH/g.

As indicated, in some implementations, the filled polyol comprises a PMPO in which the polymeric particles are the reaction product of a reaction mixture comprising, in addition to the carrier polyol, an ethylenically unsaturated monomer composition.

Suitable ethylenically unsaturated monomers for use in the reaction mixture to produce the PMPO include, for example, aliphatic conjugated dienes, such as butadiene and isoprene, monovinylidene aromatic monomers, such as styrene, α-methyl-styrene, (t-butyl)styrene, chlorostyrene, cyanostyrene and bromostyrene; α,β-ethylenically unsaturated carboxylic acids and esters thereof, such as acrylic acid, methacrylic acid, methyl methacrylate, ethyl acrylate, 2-hydroxyethyl acrylate, butyl acrylate, itaconic acid, and maleic anhydride, α,β-ethylenically unsaturated nitriles and amides, such as acrylonitrile, methacrylonitrile, acrylamide, methacrylamide, N,N-dimethyl acrylamide, and N-(dimethylaminomethyl)-acrylamide, vinyl esters, such as vinyl acetate, vinyl ethers, vinyl ketones, and vinyl and vinylidene halides, among others. Of course, mixtures of two or more of the aforementioned monomers are also suitable. In some embodiments, the ethylenically unsaturated monomer comprises at least one of styrene and its derivatives, acrylonitrile, methyl acrylate, methyl methacrylate, and vinylidene chloride.

In some embodiments, the ethylenically unsaturated monomer comprises styrene and acrylonitrile. More specifically, in some implementations, styrene and acrylonitrile are used in sufficient amounts such that the weight ratio of styrene to acrylonitrile (S:AN) is within the range of 80:20 to 20:80, such as 75:25 to 25:75, 60:40 to 40:60, or 45:55 to 55:45.

In some implementations, the reaction mixture used to produce the PMPO may further include a preformed stabilizer. Suitable preformed stabilizers include, for example, a reaction product of a reaction mixture comprising: (a) a macromer that contains reactive unsaturation, (b) an ethylenically unsaturated monomer, (c) a free radical initiator, (d) a polymer control agent; and, in some cases, (e) a diluent.

In some implementations, the macromer utilized to produce the preformed stabilizer comprises the reaction product of a reaction mixture comprising: (i) an H-functional starter having a functionality of 2 to 8 and a hydroxyl number of 20 to 50; (ii) 0.1 to 3% by weight, based on 100% by weight of the sum of components (i), (ii) and (iii), of a hydroxyl-reactive compound that contains reactive unsaturation; and (iii) 0 to 3% by weight, such as 0.05 to 2.5% by weight, or 0.1 to 1.5% by weight, based on 100% by weight of the sum of components (i), (ii) and (iii), of a diisocyanate.

Suitable preformed stabilizers can be prepared by reacting a combination of components (a), (b), (c) and (d), and optionally, (e), as described above, in a reaction zone maintained at a temperature sufficient to initiate a free radical reaction, and under sufficient pressure to maintain only liquid phases in the reaction zone, for a sufficient period of time to react (a), (b) and (c); and recovering a mixture containing the preformed stabilizer dispersed in the polymer control agent.

Suitable starters for use in preparing the macromer include compounds having a hydroxyl functionality of 2 to 8, such as 3 to 6, and a hydroxyl number of 20 to 50, such as 25 to 40. A specific example of a suitable starter is an alkylene oxide adduct of a hydroxyl functional compound, such as ethylene glycol, propylene glycol, diethylene glycol, dipropylene glycol, tripropylene glycol, glycerin, trimethylolpropane, pentaerythritol, sorbitol, ethylenediamine, and toluene diamine, among others, including mixtures of any two or more thereof, in which the alkylene oxide comprises, for example, propylene oxide, ethylene oxide, butylene oxide, or styrene oxide, among others, including mixtures of any two or more thereof, such as a mixture of propylene oxide and ethylene oxide. Such mixtures may be added simultaneously *(i.e.* two or more alkylene oxide are added as co-feeds), or sequentially (one alkylene oxide is added first, and then another alkylene oxide is added), or a combination of simultaneously and sequentially. In one embodiment, an alkylene oxide, such as propylene oxide, may be added first, and then a second alkylene oxide, such as ethylene oxide, added as a cap.

Other examples of suitable starters for preparing the macromer are polyoxyethylene glycols, triols, tetrols and higher functionality polyols, and mixtures thereof, as well as alkylene oxide adducts of non-reducing sugars and sugar derivatives, alkylene oxide adducts of phosphorus and polyphosphorus acids, alkylene oxide adducts of polyphenols, polyols prepared from natural oils such as castor oil and alkylene oxide adducts of polyhydroxyalkanes other than those described above. Illustrative alkylene oxide adducts of polyhydroxyalkanes include, alkylene oxide adducts of 1,3-dihydroxypropane, 1,3-dihydroxybutane, 1,4-dihydroxybutane, 1,4-, 1,5- and 1,6-dihydroxyhexane, 1,2-, 1,3-, 1,4- 1,6- and 1,8-dihydroxyoctant, 1,10-dihydroxydecane, glycerol, 1,2,4-tirhydroxybutane, 1,2,6-trihydroxyhexane, 1,1,1-trimethyl-olethane, 1,1,1-trimethylolpropane, pentaerythritol, caprolactone, polycaprolactone, xylitol, arabitol, sorbitol, and mannitol. Specific examples of alkylene oxide adducts of non-reducing sugars are those where the alkoxides have from 2 to 4 carbon atoms. Non-reducing sugars and sugar derivatives include sucrose, alkyl glycosides, such as methyl glycoside and ethyl glucoside, glycol glucosides, such as ethylene glycol, glycoside, propylene glycol glucoside, glycerol glucoside, and 1,2,6-hexanetriol glucoside, and alkylene oxide adducts of the alkyl glycosides. Other suitable polyols starters for preparing the macromer include polyphenols, such as alkylene oxide adducts thereof, wherein the alkylene oxides have from 2 to 4 carbon atoms. Suitable polyphenols include, for example bisphenol A, bisphenol F, condensation products of phenol and formaldehyde, the novolac resins, condensation products of various phenolic compounds and acrolein, including the 1,1,3-tris(hydroxy-phenyl)propanes, condensation products of various phenolic compounds and glyoxal, glutaraldehyde, other dialdehydes, including the 1,1,2,2-tetrakis (hydroxyphenol)ethanes.

In some implementations, the starter used to prepare the macromer has a functionality of from 3 to 6 and a hydroxyl number of from 25 to 40 mg KOH/g, and is prepared by reacting a starter, such as glycerin, trimethylolpropane, pentaerythritol, dipentaerythritol, sorbitol, mannitol, or a mixture of any two or more thereof, with an alkylene oxide comprising at least one of propylene oxide and/or ethylene oxide. In some of these embodiments, ethylene oxide is utilized in an amount of 1 to 40% by weight, such as 5 to 30% by weight or 10 to 25% by weight, based on the total weight of the starter compound. The ethylene oxide can be added as an internal block, as a random cofeed with another oxide, or as a terminal block (i.e. a "cap"). In some embodiments, all or a portion of the ethylene oxide is added as a cap on the end of the starter compound. Suitable amounts of ethylene oxide to be added as a cap range from, for example, 1 to 40% by weight, such as 3 to 30% by weight or 5 to 25% by weight, based on the total weight of starter.

As indicated earlier, in some implementations, the reaction mixture used to produce the macromer utilized to produce the preformed stabilizer also comprises a hydroxyl-reactive compound that contains reactive unsaturation. Suitable such compounds include, for example, methyl methacrylate, ethyl methacrylate, maleic anhydride, isopropenyl dimethyl benzyl isocyanate, 2-isocyanatoethyl methacrylate, adducts of isophorone diisocyanate and 2-hydroxyethyl methacrylate, and adducts of toluenediisocyanate and 2-hydroxypropyl acrylate, among others, including mixtures of any two or more thereof.

As also indicated earlier, in some implementations, the reaction mixture used to produce the macromer utilized to produce the preformed stabilizer may also comprise a diisocyanate. Suitable diisocyanates include various isomers of diphenylmethane diisocyanate and isomeric mixtures of diphenylmethane diisocyanate, such as, for example, mixtures of 2,4'-diphenylmethane diisocyanate, 4,4'-diphenylmethane diisocyanate and/or 2,2'-diphenyl-methane diisocyanate. Other suitable isocyanates include toluenediisocyanate, isophoronediisocyanate, hexamethylenediisocyanate, and 4,4'-methylenebis(cyclohexyl isocyanate), among others, includes mixtures of any two or more thereof.

In certain implementations, the macromer is used in an amount of 10 to 40% by weight, such as 15 to 35% by weight, based on the total weight of the reaction mixture used to produce the preformed stabilizer.

As previously mentioned, in some implementations, the reaction mixture used to form the preformed stabilizer used to produce the PMPO also comprises an ethylenically unsaturated monomer. Suitable such ethylenically unsaturated monomers are aliphatic conjugated dienes, such as butadiene and isoprene, monovinylidene aromatic monomers such as styrene, α-methylstyrene, (t-butyl)styrene, chlorostyrene, cyanostyrene and bromostyrene, α,β-ethylenically unsaturated carboxylic acids and esters thereof, such as acrylic acid, methacrylic acid, methyl methacrylate, ethyl acrylate, 2-hydroxyethyl acrylate, butyl acrylate, itaconic acid, maleic anhydride and the like, α,β-ethylenically unsaturated nitriles and amides, such as acrylonitrile, methacrylonitrile, acrylamide, methacrylamide, N,N-dimethyl acrylamide, N-dimethylaminomethyl)acryl-amide and the like, vinyl esters, such as vinyl acetate; vinyl ethers, vinyl ketones, vinyl and vinylidene halides, as well as a wide variety of other ethylenically unsaturated materials which are copolymerizable with the macromer, including mixture of any two or more thereof.

In some implementations, the ethylenically unsaturated monomer present in the reaction mixture used to form the preformed stabilizer comprises a mixture of acrylonitrile and at least one other ethylenically unsaturated comonomer which is copolymerizable with acrylonitrile, such as, for example, styrene and its derivatives, acrylates, methacrylates, such as methyl methacrylate, vinylidene chloride, among others, as well as mixtures of any two or more thereof. When using acrylonitrile with a comonomer, it is sometimes desirable that a minimum of 5 to 15% by weight acrylonitrile be maintained in the system. One specific ethylenically unsaturated monomer mixture suitable for making the preformed stabilizer comprises a mixture of acrylonitrile and styrene in which, for example, acrylonitrile is used in an amount of 20 to 80% by weight, such as 30 to 70% by weight, based on the total weight of the monomer mixture, and styrene is used in an amount of 80 to 20% by weight, such as 70 to 30% by weight percent, based on the total weight of the monomer mixture.

In certain implementations, the ethylenically unsaturated monomer is used in an amount of 10 to 30% by weight, such as 15 to 25% by weight, based on the total weight of the reaction mixture used to produce the preformed stabilizer.

The reaction mixture used to produce the preformed stabilizer, in certain implementations, also includes a free radical initiator. Suitable free-radical initiators include peroxides, including both alkyl and aryl hydro-peroxides, persulfates, perborates, percarbonates, and azo compounds. Some specific examples include hydrogen peroxide, di(t-butyl)-peroxide, t-butylperoxy diethyl acetate, t-butyl peroctoate, t-butyl peroxy isobutyrate, t-butyl peroxy 3,5,5-trimethyl hexanoate, t-butyl perbenzoate, t-butyl peroxy pivalate, t-amyl peroxy pivalate, t-butyl peroxy-2-ethyl hexanoate, lauroyl peroxide, cumene hydroperoxide, t-butyl hydroperoxide, azobis(isobutyronitrile), and 2,2'-azo bis-(2-methylbutyronitrile). Representative examples of useful initiators species include t-butyl peroxy-2-ethyl-hexanoate, t-butylperpivalate, t-amyl peroctoate, 2,5-dimethyl-hexane-2,5-di-per-2-ethyl hexoate, t-butylperneodecanoate, and t-butylperbenzoate, as well as azo compounds, such as azobis-isobutyronitrile, 2,2'-azo bis-(2-methylbutyro-nitrile), and mixtures thereof.

In some implementations, the free radical initiator is used in an amount of 0.01 to 2% by weight, such as 0.05 to 1% by weight or 0.05 to 0.3% by weight, based on the total weight of the reaction mixture used to produce the preformed stabilizer.

The reaction mixture used to produce the preformed stabilizer, in some implementations, also includes a polymer control agent, such as various mono-ols (i.e. monohydroxy alcohols), aromatic hydrocarbons, and ethers. Specific examples of suitable polymer control agents are alcohols containing at least one carbon atom, such as methanol, ethanol, n-propanol, isopropanol, n-butanol, sec.-butanol, t-butanol, n-pentanol, 2-pentanol, 3-pentanol, and the like, and mixtures of any two or more thereof. Other suitable polymer control agents are ethylbenzene and toluene.

In certain implementations, the polymer control agent is used in an amount of 30 to 80% by weight or 40 to 70% by weight, based on the total weight of the reaction mixture used to produce the preformed stabilizer.

As previously indicated, the reaction mixture used to produce the preformed stabilizer may also include a diluent, such as alkylene oxide adducts having a hydroxyl functionality of greater 2. In some implementations, the diluent is the same as or similar to the polyol used in the formation of precursor used to prepare the preformed stabilizer. In certain implementations, the diluent is used in an amount of 0 to 40% by weight, such as 0 to 20% by weight, or, in some cases, 0 to 10% by weight, based on the total weight of the reaction mixture used to produce the preformed stabilizer.

The preformed stabilizer can be produced by a process similar to that of making the PMPO. The temperature range is not critical and may vary from, for example, 80°C to 150°C, such as 115°C to 125°C. The mixing conditions employed can, for example, be those obtained using a back mixed reactor.

As indicated earlier, the reaction mixture used to produce certain implementations of the PMPO also comprises a free radical initiator. Suitable such free-radical initiators include, for example, any of those described previously with respect to the production of the preformed stabilizer. In certain implementations, the free-radical initiator is present in the reaction mixture used to produce the PMPO in an amount of 0.01 to 2% by weight, based on 100% by weight of the PMPO.

In some implementations, the reaction mixture used in preparing the PMPO further comprises a chain transfer agent. Examples of suitable chain transfer agents are mercaptans, such as dodecane thiol, ethane thiol, octane thiol, and toluene thiol, halogenated hydrocarbons, such as carbon tetrachloride, carbon tetrabromide, and chloroform, amines, such as diethylamine, and enol-ethers. In some embodiments, if used, the chain transfer agent is used in an amount of 0.1 to 2% by weight, such as 0.2 to 1% by weight, based on the total weight of the reaction mixture used to produce the PMPO.

The reaction mixture used in preparing the PMPO, in some implementations, also includes a polymer control agent, such as various mono-ols (i.e. monohydroxy alcohols), aromatic hydrocarbons, and ethers. Specific examples of suitable polymer control agents are alcohols containing at least one carbon atom, such as methanol, ethanol, n-propanol, isopropanol, n-butanol, sec.-butanol, t-butanol, n-pentanol, 2-pentanol, 3-pentanol, and the like, and mixtures of any two or more thereof. Other suitable polymer control agents are ethylbenzene and toluene.

The foregoing PMPOs can be made using any process and reactor configuration that is known to be suitable to prepare filled polyols, such as that which is described in U.S. Patent Application Publication No. US 2017/0306076 A1 at [0139]-[0144] and [0146], the cited portions of which being incorporated herein by reference.

One specific example of a PMPO that is suitable for use in the isocyanate-reactive compositions of this specification is Arcol^{®} 34-28 that is commercially available from Covestro LLC.

In some embodiments, the filled polyol is present in the isocyanate-reactive composition in an amount sufficient so that the foregoing polyether polyol that has a functionality of 2 to 8, an OH number of 20 to 400 mg KOH/g, and a poly(oxyethylene) content of 0 to 50% by weight, based on total weight of the polyether polyol, is present in an amount of at least 50% by weight, at least 60% by weight, at least 70% by weight, at least 80% by weight, or 80 to 90% by weight, based on total weight of polyol present in the isocyanate-reactive composition. Further, in some embodiments, the filled polyol is present in the isocyanate-reactive composition in an amount sufficient so that the polymeric particles are present in an amount of 10% by weight to 50% by weight, such as 10% by weight to 40% by weight, 10% by weight to 30% by weight, or 15% by weight to 20% by weight, based on the total weight of the isocyanate-reactive composition.

The isocyanate-reactive compositions of this specification may, and often do, include other polyols. For example, in some implementations, the isocyanate-reactive compositions of this specification include a polyether polyol (b) having a functionality of 2 to 6, an OH number of 20 to 120 mg KOH/g, and a poly(oxyethylene) content of at least 60% by weight, based on the total weight of the polyether polyol. More specifically, in some implementations, such polyether polyols have a functionality of 2 to 4, 2.5 to 3.5, or, in some cases, 2.8 to 3.2. In addition, in some implementations, such polyether polyols have an OH number of 20 to 112 mg KOH/g, 20 to 100 mg KOH/g, 20 to 50 mg KOH/g, 25 to 50 mg KOH/g, or 30 to 50 mg KOH/g. Also, in some implementations, such polyether polyols have poly(oxyethylene) content of 60% to 90% by weight, 60 to 80% by weight, or 65 to 75% by weight, based on the total weight of the polyether polyol. Further, in some implementations, such polyether polyols have at least 50 mol %, such as 50 to 70 mole % or 50 to 60 mole %, of primary OH groups.

Specific examples of suitable such polyether polyols (b) include alkylene oxide addition products of starter compounds with Zerewitinoff-active hydrogen atoms. Suitable starter compounds with Zerewitinoff-active hydrogen atoms which are used for the production of such polyether polyols often have a hydroxyl functionality of 2 to 6, 2 to 4, or, in some cases, 3. Specific examples of suitable hydroxy-functional starter compounds are propylene glycol, ethylene glycol, diethylene glycol, dipropylene glycol, 1,2-butanediol, 1,3-butanediol, 1,4-butanediol, hexanediol, pentanediol, 3-methyl-1,5-pentanediol, 1,12-dodecanediol, glycerol, trimethylolpropane, triethanolamine, pentaerythritol, sorbitol, sucrose, hydro-quinone, pyrocatechol, resorcinol, bisphenol F, bisphenol A, 1,3,5-trihydroxybenzene, and condensation products of formaldehyde and phenol or melamine or urea which contain methylol groups. Specific examples of alkylene oxides suitable for preparing such polyether polyols include ethylene oxide ("EO"), propylene oxide ("PO"), 1,2-butylene-oxide or 2,3-butylene oxide and styrene oxide. In some cases, propylene oxide and ethylene oxide are introduced into the reaction mixture individually, in a mixture or successively. If the alkylene oxides are metered in successively, the resulting products contain polyether chains with block structures. Products with ethylene oxide blocks are characterized by increased concentrations of primary end groups. The alkoxylation reaction may be catalyzed using any conventional catalyst including, for example, potassium hydroxide (KOH) or a double metal cyanide (DMC) catalyst.

In some implementations, the foregoing polyether polyol (b) having a functionality of 2 to 6, an OH number of 20 to 120 mg KOH/g, and a poly(oxyethylene) content of at least 60% by weight, based on the total weight of the polyether polyol may be present as a carrier polyol for a filled polyol, such as a PMPO. Such a filled polyol, or PMPO, would, of course, therefore be a different filled polyol, or PMPO, than the filled polyol and PMPOs described earlier in this specification. In other embodiments, however, such polyether polyol (b) is not present as a carrier polyol for a filled polyol, such as a PMPO.

In some implementations, the foregoing polyether polyol (b) that has a functionality of 2 to 6, an OH number of 20 to 120 mg KOH/g, and a poly(oxyethylene) content of at least 60% by weight, based on the total weight of the polyether polyol is present in an amount of 0.1 to 20% by weight, 0.1 to 10% by weight, 1 to 10% by weight, 2 to 8% by weight, or 2 to 6% by weight, based on total weight of polyol present in the isocyanate-reactive composition.

In addition, in some cases, the isocyanate-reactive composition further comprises a diol chain-extender having a molecular weight of less than 300 Da. Specific examples of such diol chain extenders include, but are not limited to, ethylene glycol, propylene glycol, butylene glycol, glycerol, diethylene glycol, dipropylene glycol, and dibutylene glycol. In some embodiments, the diol chain-extender is present in an amount of 1 to 20% by weight, 5 to 15% by weight, 5 to 10% by weight, or 7 to 9% by weight, based total weight of polyol present in the isocyanate-reactive composition.

As indicated previously, in addition to the polymeric particles described above, the isocyanate-reactive compositions of this specification also include polymer-ceramic composite particles dispersed in the polyether polyol(s) described above. The term "polymer-ceramic composite particle" refers to particles that includes both a ceramic material and a polymer. For example, in some cases, the ceramic material present in such particles may include any of a variety of inorganic oxides, nitrides or carbides, such as, for example, silicon dioxide, aluminum oxide, silicon nitride, aluminum nitride, aluminum silicate, calcium silicate, boron nitride, silicon carbide, titanium dioxide, strontium titanate, calcium titanate, zirconium dioxide, or a combination thereof. In some cases, the polymer material included in such particles may include, for example, a polyolefin, such as polyethylene, polypropylene, or a combination thereof.

In some cases, the polymer-ceramic composite particles have a mean particle size of no more than 12 µm, such as 2 to 12 µm, 2 to 9 µm, 2 to 6 µm, 3 to 6 µm, or 3.5 to 5.5 µm, as determined by laser diffraction analysis.

Further, in some embodiments, the polymer-ceramic composite particles are present in an amount of 1 to 5% by weight, 2 to 4% by weight, or 2 to 3% by weight, based on total weight of the isocyanate-reactive composition.

Specific examples of polymer-ceramic composite particles that are suitable for use in the isocyanate-reactive compositions of this specification include, but are not limited to, PolyGlide 1226XF and PolyTuf^{®} 1229, which are commercially available from Micro Powders, Inc.

As previously indicated, the isocyanate-reactive compositions of this specification include water that acts as a blowing agent. In some embodiments, water is present in an amount of 0.1 to 1% by weight or 0.5 to 1.0% by weight, or 0.7 to 0.9% by weight, based on total weight of the isocyanate-reactive composition. In some embodiments, water is the only, or essentially the only, blowing agent present in the isocyanate-reactive composition. Thus, in these cases, the isocyanate-reactive composition is essentially free, or completely free, of any physical blowing agent or any other chemical blowing agent. As used herein, "essentially free" when used with reference to the absence of such other blowing agents in the isocyanate-reactive composition, means that any such other blowing agents are present in an amount of no more than 10% by weight, in some cases no more than 1% by weight, based on total weight of water present in the isocyanate-reactive composition.

It was discovered that use of the foregoing polymer-ceramic composite particles, in the amounts described above, enabled productions of foams that do not include any fluoropolymers, but exhibit slip properties comparable to foams that utilize such fluoropolymers and while retaining other properties, such as self-healing properties, that make them particularly suitable for use as a foam target backing material. As a result, the isocyanate-reactive compositions described herein do not include any fluoropolymers.

The isocyanate-reactive compositions may include any of a variety of other components.

The polyurethane foam-forming compositions of this specification often comprise a catalyst. For example, in some cases, the catalyst may include a "gel catalyst" and a "blow catalyst". As will be appreciated, a "gel catalyst" refers to a catalyst that has a greater effect on the urethane-forming reaction of a polyol and polyisocyanate than it does on the water-polyisocyanate blowing reaction, whereas a "blow catalyst" has a greater effect on the water-polyisocyanate blowing reaction than it does on the urethane-forming reaction of a polyol and polyisocyanate.

Suitable catalysts include, for example, aliphatic tertiary amines (such as diethylenetriamine, trimethylamine and/or tetramethylbutanediamine), a cycloaliphatic tertiary amine (such as 1,4-diaza (2,2,2) bicyclooctane), an aliphatic amino ether (such as dimethylaminoethyl ether and/or N, N, N-trimethyl-N- hydroxyethyl bisaminoethyl ether), a cycloaliphatic amino ether (such as N-ethylmorpholine), an aliphatic amidine, a cycloaliphatic amidine, a urea, a derivative of urea (such as aminoalkyl ureas, including (3-dimethylaminopropylamine)urea), a tin catalyst (such as di-n-octyltin mercaptide), a tin (II) salts of carboxylic acid (such as tin (II) ricinoleate, tin (II) acetate, tin (II) octoate, tin (II) ethylhexanoate and tin (II) laurate), a tin (IV) compound (such as dibutyltin oxide, dibutyltin dichloride, dibutyltin diacetate, dibutyltin dilaurate, dibutyltin maleate, and dioctyltin diacetate), or a mixture of any two or more thereof. Specific examples of suitable catalysts include combinations of diethylenetriamine and a tin catalyst.

In some implementations, the catalyst is present in an amount of 0.001 to 2.0 % by weight, such as 0.01 to 1.0 % by weight, 0.1 to 1.5 % by weight, or, in some cases, 0.5 to 1.0 % by weight, by weight of the isocyanate-reactive composition.

If desired, the isocyanate-reactive composition may also include a surfactant, such as organosilicon compounds, including polysiloxane-polyalkyene-block copolymers, such as a polyether-modified polysiloxane, as well as polyethylene glycol ethers of long chain alcohols, tertiary amine or alkanolamine salts of long chain alkyl acid sulfate esters, alkylsulfonic esters, or alkylarylsulfonic acids.

Additional materials which may optionally be included in the foam-forming compositions of the present invention include pigments, colorants, fillers, antioxidants, flame retardants, and stabilizers. Exemplary flame retardants useful in the foam-forming composition of the present invention include, but are not limited to, reactive bromine-based compounds and chlorinated phosphate esters, including but not limited to, tri(2-chloroethyl)phosphate (TECP), tri(1,3-dichloro-2-propyl)phosphate, tri(1-chloro-2-propyl)phosphate (TCPP) and dimethyl propyl phosphate (DMPP).

Some embodiments of this specification relate to foam-forming compositions that include (i) an isocyanate-reactive composition as described above, and (ii) a diisocyanate and/or polyisocyanate (collectively referred to herein as a "polyisocyanate").

Any of the known organic polyisocyanates, modified polyisocyanates or isocyanate-terminated prepolymers made from any of the known organic isocyanates may be used. Suitable organic isocyanates include aromatic, aliphatic, and cycloaliphatic polyisocyanates and combinations thereof. Useful polyisocyanates include: diisocyanates, such as m-phenylene diisocyanate, p-phenylene diisocyanate, 2,4-toluene diisocyanate, 2,6-toluene diisocyanate, 1,6-hexamethylene diisocyanate, 1,4-hexamethylene diisocyanate, 1,3-cyclohexane diisocyanate, 1,4-cyclo-hexane diisocyanate, isomers of hexahydro-toluene diisocyanate, isophorone diisocyanate, dicyclo-hexylmethane diisocyanates, 1,5-naphthylene diisocyanate, 4,4'-diphenylmethane diisocyanate, 2,4'-diphenylmethane diisocyanate, 4,4'-biphenylene diisocyanate, 3,3'-dimethoxy-4,4'-biphenylene diisocyanate and 3,3'-dimethyl-diphenylpropane-4,4'-diisocyanate; triisocyanates such as 2,4,6-toluene triisocyanate; and polyisocyanates such as 4,4'-dimethyl-diphenylmethane-2,2',5,5'-tetraisocyanate and the polymethylene polyphenyl-polyisocyanates.

Undistilled or crude polyisocyanates may also be used. The crude toluene diisocyanate obtained by phosgenating a mixture of toluene diamines and the crude diphenylmethane diisocyanate obtained by phosgenating crude diphenylmethanediamine (polymeric MDI) are examples of suitable crude polyisocyanates. Suitable undistilled or crude polyisocyanates are disclosed in U.S. Pat. No. 3,215,652.

Modified polyisocyanates are obtained by chemical reaction of polyisocyanates. Useful modified polyisocyanates include, but are not limited to, those containing ester groups, urea groups, biuret groups, allophanate groups, carbodiimide groups, isocyanurate groups, uretdione groups and/or urethane groups. Examples of modified polyisocyanates include prepolymers containing NCO groups and having an NCO content of from 25 to 35 weight percent, such as from 29 to 34 weight percent, such as those based on polyether polyols or polyester polyols and diphenylmethane diisocyanate.

In certain embodiments, the polyisocyanate comprises a methylene-bridged polyphenyl polyisocyanate and/or a prepolymer of methylene-bridged polyphenyl polyisocyanates. In some embodiments, the polyisocyanate used has an average functionality of 1.8 to 3.5, such as 2.0 to 3.1, isocyanate moieties per molecule and an NCO content of 22 to 26 weight percent.

In certain embodiments of the foam-forming compositions of this specification, the polyisocyanate and the isocyanate-reactive composition are mixed at an isocyanate index of 40 to 80, such as 40 to 60 or 50 to 60. As used herein, "isocyanate index" refers to the molar ratio of isocyanate groups to isocyanate-reactive groups, multiplied by 100.

This disclosure also relates to processes for producing foams. The rigid foams may be prepared by blending all of the components of the isocyanate-reactive composition together in a phase stable mixture, and then mixing this in the proper ratio with the polyisocyanate. Alternatively, one or more of the components, such as the surfactant, may be combined with the organic polyisocyanate prior to mixing it with the isocyanate-reactive composition. Other possibilities include adding one or more of the components as a separate stream, together with polyol(s) and the polyisocyanate.

Many foam machines are designed to condition and mix only two components in the proper ratio. For use of such machines, a premix of all the components except the polyisocyanate can be advantageously employed. According to the two-component method (component A: polyisocyanate; and component B: isocyanate-reactive composition which typically includes the polyol, particles, water, catalyst and other optional ingredients), the components may be mixed in the proper ratio at a temperature of 5 to 50°C, such as 15 to 35°C, injected or poured into a mold having the temperature controlled to within a range of 20 to 70°C, such as 35 to 60°C. The mixture then expands to fill the cavity with the rigid polyurethane foam.

In some implementations, the resulting foam is an opened-cell, semi-rigid foam. As used herein, an opened-cell foam refers to a foam in which greater than 50% of the cells in the foam are not completely sealed, thereby allowing air to pass through the cells. Open-cell content can be determined according to ASTM D6226-21. In some cases, the foam has a density, measured according to ASTM D1622-14, of no more than 20 lb/ft³ (no more than 320 kg/m³), such as 5 to 15 lb/ft³ (80 to 240 kg/m³), or 8 to 12 lb/ft³ (128 to 192 kg/m³).

As indicated earlier, the foams described herein may be particularly suitable for use as a target backing. As a result, some implementations of the inventions described herein are directed to a target that comprises: (a) a cover having target markings formed thereon; and (b) a foam core that is enclosed by the cover. The foam core comprises: (i) polymeric particles; and (ii) polymer-ceramic composite particles and does not include any fluoropolymer. The foam core may be a polyurethane foam produced as described earlier using the isocyanate-reactive compositions of this specification.

Referring now to Fig. 1, there is depicted a target according to certain embodiments of the inventions of this disclosure. As is apparent, target **10** includes a cover **20** having target markings **30** formed on the cover **20.** Foam core **40** (which is visible via a cut-away) is enclosed by cover **20.** The foam core includes polymeric particles **50** and polymer-ceramic composite particles **60** that are dispersed throughout foam core **40.** The cover **20** may be constructed, for example, of a layer of fabric, such as a flexible polyester, polypropylene, cotton, or other natural or synthetic fabric, such as where the cover **20** is constructed of woven or non-woven fibers, such as woven or non-woven polyester, polyolefin (such as polypropylene), cotton, or other natural or synthetic woven fibers. The fabric layer may be uncoated or coated, such as with a polyurethane coating. Target markings **30** may be of any desired size and configuration, such as a bull' s-eye, a circle, a ring, among others. The target **10** may be configured to receive any of any variety of different types of projectiles, such as darts and arrows, among others.

In other implementations, the foams described herein may be particularly suitable for use as a foam target in which target markings are formed directly on the foam. Referring now to Fig. 2, there is depicted a target according to certain embodiments of the inventions of this disclosure. As is apparent, in this embodiments, target **100** is constructed of foam **400** in which target markings **300** are formed directly on foam **400,** such as by painting such target markings **300 on** foam **400.** The foam **400** includes polymeric particles **500** and polymer-ceramic composite particles **600** that are dispersed throughout foam **400.**

Various aspects of the subject matter described herein are set out in the following numbered clauses:
Clause 1. An isocyanate-reactive composition comprising: (a) a polyether polyol having a functionality of 2 to 8, an OH number of 20 to 400 mg KOH/g, and a poly(oxyethylene) content of 0 to 50% by weight, based on total weight of the polyether polyol (a); (b) particles dispersed in the polyether polyol, the particles comprising: (i) polymeric particles, and (ii) polymer-ceramic composite particles; and (c) water, with the proviso that the isocyanate-reactive composition does not include any fluoropolymer.
Clause 2. The isocyanate-reactive composition of clause 1, wherein the dispersion of polymeric particles in polyether polyol (a) comprises a filled polyol in which the polymeric particles are dispersed in a carrier polyol comprising polyether polyol (a).
Clause 3. The isocyanate-reactive composition of clause 2, wherein the filled polyol has a solids content of 20% by weight to 75% by weight, 20% by weight to 70% by weight, 20% by weight to 60% by weight, 20% by weight to 40% by weight, or 20% by weight to 30% by weight, based on the total weight of the filled polyol.
Clause 4. The isocyanate-reactive composition of clause 2 or clause 3, wherein the filled polyol has a viscosity of less than 50,000 mPa.s, less than 40,000 mPa.s, less than 30,000 mPa.s, less than 20,000 mPa.s, less than 10,000 mPa+s, less than 5,000 mPa·s, 1,000 to 5,000 mPa·s, or 1,000 to 3,000 mPa·s.
Clause 5. The isocyanate-reactive composition of one of clause 2 to clause 4, wherein the filled polyol comprises a PIPA polyol, a PHD polyols, or a PMPO.
Clause 6. The isocyanate-reactive composition of one of clause 1 to clause 5, wherein polyether polyol (a) has a functionality of 2 to 6, 2 to 4, 2.5 to 3.5, or 2.8 to 3.2.
Clause 7. The isocyanate-reactive composition of one of clause 1 to clause 6, wherein polyether polyol (a) has an OH number of 20 to 100 mg KOH/g, 20 to 50 mg KOH/g, 25 to 50 mg KOH/g, or 30 to 50 mg KOH/g.
Clause 8. The isocyanate-reactive composition of one of clause 1 to clause 7, wherein polyether polyol (a) has a poly(oxyethylene) content of 1 to 40% by weight, 1 to 30% by weight, 10 to 30% by weight, or 10 to 20% by weight, based on the total weight of polyether polyol (a).
Clause 9. The isocyanate-reactive composition of one of clause 1 to clause 8, wherein polyether polyol (a) has more than 50 mol%, 70 to 90 mol% or 70 to 80 mol%, of primary OH groups.
Clause 10. The isocyanate-reactive composition of one of clause 1 to clause 9, wherein the polymeric particles are the reaction product of a reaction mixture comprising an ethylenically unsaturated monomer composition.
Clause 11. The isocyanate-reactive composition of clause 10, wherein the ethylenically unsaturated monomer composition comprises styrene and acrylonitrile, such as where styrene and acrylonitrile are present in amounts such that a weight ratio of styrene to acrylonitrile (S:AN) is within the range of 80:20 to 20:80, 75:25 to 25:75, 60:40 to 40:60, or 45:55 to 55:45.
Clause 12. The isocyanate-reactive composition of one of clause 1 to clause 11, wherein the polyether polyol (a) is present in an amount of at least 50% by weight, at least 60% by weight, at least 70% by weight, at least 80% by weight, or 80 to 90% by weight, based on total weight of polyol present in the isocyanate-reactive composition.
Clause 13. The isocyanate-reactive composition of one of clause 1 to clause 12, wherein the polymeric particles are present in an amount of 10% by weight to 50% by weight, 10% by weight to 40% by weight, 10% by weight to 30% by weight, or 15% by weight to 20% by weight, based on the total weight of the isocyanate-reactive composition.
Clause 14. The isocyanate-reactive composition of one of clause 1 to clause 13, further comprising a polyether polyol (b) having a functionality of 2 to 6, an OH number of 20 to 120 mg KOH/g, and a poly(oxyethylene) content of at least 60% by weight, based on the total weight of the polyether polyol.
Clause 15. The isocyanate-reactive composition of clause 14, wherein the polyether polyol (b) has a functionality of 2 to 4, 2.5 to 3.5, or 2.8 to 3.2.
Clause 16. The isocyanate-reactive composition of clause 14 or clause 15, wherein polyether polyol (b) has an OH number of 20 to 112 mg KOH/g, 20 to 100 mg KOH/g, 20 to 50 mg KOH/g, 25 to 50 mg KOH/g, or 30 to 50 mg KOH/g.
Clause 17. The isocyanate-reactive composition of one of clause 14 to clause 16, wherein polyether polyol (b) has a poly(oxyethylene) content of 60% to 90% by weight, 60 to 80% by weight, or 65 to 75% by weight, based on the total weight of the polyether polyol.
Clause 18. The isocyanate-reactive composition of one of clause 14 to clause 17, wherein polyether polyol (b) has at least 50 mol %, 50 to 70 mole % or 50 to 60 mole %, of primary OH groups.
Clause 19. The isocyanate-reactive composition of one of clause 14 to clause 18, wherein polyether polyol (b) is present in an amount of 0.1 to 20% by weight, 0.1 to 10% by weight, 1 to 10% by weight, 2 to 8% by weight, or 2 to 6% by weight, based on total weight of polyol present in the isocyanate-reactive composition.
Clause 20. The isocyanate-reactive composition of one of clause 1 to clause 19, further comprising a diol chain-extender having a molecular weight of less than 300 Da, such as where the diol chain extender comprises ethylene glycol, propylene glycol, butylene glycol, glycerol, diethylene glycol, dipropylene glycol, dibutylene glycol, or a combination of any two or more thereof.
Clause 21. The isocyanate-reactive composition of clause 20, wherein the diol chain-extender is present in an amount of 1 to 20% by weight, 5 to 15% by weight, 5 to 10% by weight, or 7 to 9% by weight, based total weight of polyol present in the isocyanate-reactive composition.
Clause 22. The isocyanate-reactive composition of one of clause 1 to clause 21, wherein the polymer-ceramic composite particles comprise an inorganic oxide, an inorganic nitrides, or an inorganic carbide, such as where the polymer-ceramic composite particles comprise silicon dioxide, aluminum oxide, silicon nitride, aluminum nitride, aluminum silicate, calcium silicate, boron nitride, silicon carbide, titanium dioxide, strontium titanate, calcium titanate, zirconium dioxide, or a combination thereof.
Clause 23. The isocyanate-reactive composition of one of clause 1 to clause 22, wherein the polymer-ceramic composite particles comprise a polyolefin, such as polyethylene, polypropylene, or a combination thereof.
Clause 24. The isocyanate-reactive composition of one of clause 1 to clause 23, wherein the polymer-ceramic composite particles have a mean particle size of no more than 12 µm, 2 to 12 µm, 2 to 9 µm, 2 to 6 µm, 3 to 6 µm, or 3.5 to 5.5 µm, as determined by laser diffraction analysis.
Clause 25. The isocyanate-reactive composition of one of clause 1 to clause 24, wherein the polymer-ceramic composite particles are present in an amount of 1 to 5% by weight, 2 to 4% by weight, or 2 to 3% by weight, based on total weight of the isocyanate-reactive composition.
Clause 26. The isocyanate-reactive composition of one of clause 1 to clause 25, wherein the water is present in an amount of 0.1 to 1% by weight or 0.5 to 1.0% by weight, or 0.7 to 0.9% by weight, based on total weight of the isocyanate-reactive composition.
Clause 27. The isocyanate-reactive composition of one of clause 1 to clause 26, with the proviso that the isocyanate-reactive composition is essentially free, or completely free, of any physical blowing agent or any other chemical blowing agent.
Clause 28. The isocyanate-reactive composition of one of clause 1 to clause 27, wherein the isocyanate-reactive composition further comprises a catalyst, such as where the catalyst comprises a gel catalyst and a blow catalyst.
Clause 29. The isocyanate-reactive composition of clause 28, wherein the catalyst comprises an aliphatic tertiary amine, such as diethylenetriamine, trimethylamine and/or tetramethylbutanediamine; a cycloaliphatic tertiary amine, such as 1,4-diaza (2,2,2) bicyclooctane; an aliphatic amino ether, such as dimethylaminoethyl ether and/or N, N, N-trimethyl-N- hydroxyethyl bisaminoethyl ether; a cycloaliphatic amino ether, such as N-ethylmorpholine; an aliphatic amidine; a cycloaliphatic amidine; a urea; a derivative of urea, such as an aminoalkyl urea (including (3-dimethylaminopropylamine)urea); a tin catalyst, such as di-n-octyltin mercaptide, a tin (II) salt of carboxylic acid (such as tin (II) ricinoleate, tin (II) acetate, tin (II) octoate, tin (II) ethylhexanoate and tin (II) laurate), a tin (IV) compound (such as dibutyltin oxide, dibutyltin dichloride, dibutyltin diacetate, dibutyltin dilaurate, dibutyltin maleate, and dioctyltin diacetate); or a mixture of any two or more thereof.
Clause 30. The isocyanate-reactive composition of clause 28 or clause 29, wherein the catalyst is present in an amount of 0.001 to 2.0 % by weight, 0.01 to 1.0 % by weight, 0.1 to 1.5 % by weight, or 0.5 to 1.0 % by weight, by weight of the isocyanate-reactive composition.
Clause 31. A foam-forming composition comprising: (i) the isocyanate-reactive composition of any one of clause 1 to clause 30; and (ii) a polyisocyanate.
Clause 32. The foam-forming composition of clause 31, wherein the polyisocyanate comprises a methylene-bridged polyphenyl polyisocyanate and/or a prepolymer of methylene-bridged polyphenyl polyisocyanate.
Clause 33. The foam-forming composition of clause 31 or clause 32, wherein the polyisocyanate has an average functionality of 1.8 to 3.5 or 2.0 to 3.1 isocyanate moieties per molecule and an NCO content of 22 to 26 weight percent.
Clause 34. The foam-forming composition of one of clause 31 to clause 33, wherein the polyisocyanate and the isocyanate-reactive composition are present at an isocyanate index of 40 to 80, 40 to 60, or 50 to 60.
Clause 35. A polyurethane foam comprising a reaction product of the foam-forming composition of one of clause 31 to clause 34.
Clause 36. The polyurethane foam of clause 35, wherein the polyurethane foam is an opened-cell foam.
Clause 37. The polyurethane foam of clause 35 or clause 36, wherein the polyurethane foam is a semi-rigid foam.
Clause 38. The polyurethane foam of one of clause 35 to clause 37, wherein the polyurethane foam has a density, measured according to ASTM D1622-14, of no more than 20 lb/ft³ (no more than 320 kg/m³), 5 to 15 lb/ft³ (80 to 240 kg/m³), or 8 to 12 lb/ft³ (128 to 192 kg/m³).
Clause 39. A target comprising the polyurethane foam of one of clause 35 to clause 38 having target markings formed directly on the polyurethane foam.
Clause 40. A target comprising: (a) a cover having target markings formed thereon; and (b) a foam core that is enclosed by the cover, wherein the foam core comprises the polyurethane foam of one of clause 35 to clause 38.

The non-limiting and non-exhaustive examples that follow are intended to further describe various non-limiting and non-exhaustive embodiments without restricting the scope of the embodiments described in this specification.

### EXAMPLES

Foam-forming compositions were prepared using the ingredients and amounts (in % by weight) set forth in Table 1 below. The following materials were used:
POLYOL 1: A PMPO containing 22.5% by weight of polymeric particles produced from styrene and acrylonitrile (S:AN ratio of 50:50) dispersed in a polyether polyol containing having a functionality of 3, an OH number of 35 mg KOH/g, and having a poly(oxyethylene) content of 15% by weight, based on total weight of the polyether polyol;
POLYOL 2: A polyether polyol prepared using 72.7% by weight EO and 27.3% by weight PO as the alkylene oxide and glycerin as OH functional starter, having a functionality of 3, an OH number of 35-39 mg KOH/g polyol, and 50-60 mol % primary OH;
POLYOL 3: 1,4-butanediol;
PARTICLES 1: composite particles of low-density polyethylene and PTFE having a mean particle size of 9-12 µm, commercially available from Micro Powders, Inc. as Polyfluo^{®} 190;
PARTICLES 2: low density polyethylene wax particles having a mean particle size of 9.5-12.5 µm, commercially available from Micro Powders, Inc. as MPP-123;
PARTICLES 3: polyethylene/ceramic composite particles having a mean particle size of 3.5 to 5.5 µm, commercially available from Micro Powders, Inc. as PolyGlide 1226XF;
PARTICLES 4: polyethylene/ceramic composite particles having a mean particle size of 9 to 12 µm, commercially available from Micro Powders, Inc. as PolyTuf^{®} 1229;
PARTICLES 5: polyethylene/amide wax particles having a mean particle size of 6.0 to 7.5 µm, commercially available from Micro Powders, Inc. as Superslip 6530;
CATALYST 1: formic acid-blocked triethylenediamine, commercially available as Dabco^{®} 8154 from Evonik;
CATALYST 2: organotin catalyst commercially available as Dabco^{®} 131 from Evonik;
COLORANT: Black Repitan^{®} 99430: carbon black dispersion in a polyether polyol commercially available from Repi; and
ISOCYANATE: modified polymeric diphenylmethane diisocyanate having a NCO content 24.2 - 25.2 wt. % and a viscosity at 25°C of 250-450 mPa•s, commercially available as Mondur^{®} 1417 from Covestro.

In each case, a masterbatch was prepared by mixing the polyols, catalysts, surfactant, water, and blowing agents in the amounts (% by weight) indicated in Table 1. Foams were prepared by mixing the isocyanate with the blend just described in the amounts (% by weight resin - including the polyols, catalysts, surfactant, water, and blowing agents) indicated in Table 1. The resin/isocyanate mixture was then placed in a pressurized mold at a temperature of 60°C and allowed to react for 10 minutes, after which the foam was removed from the mold.

Foams were evaluated for apparent density and pull force. Apparent density was measured for the entire foam piece. Pull force was measured via an in-house method, wherein the foam was clamped to a plate, and either: 1) a stainless steel probe of 1/2 in. diameter was inserted 3 1/2 in. into the foam at a controlled velocity of 20 in/min via an Instron 5982 Universal Testing Machine, the probe was then removed at the same velocity, and the force required to remove the probe was measured; or 2) an Easton Carbon Legacy size 340 arrow, with outer diameter 0.307 in. with an aluminum tip was inserted into the foam at the same velocity. In both cases 1) and 2), the maximum force required to remove the probe or arrow was recorded as the pull force. Results are set forth in Table 1.

In Table 1, Examples 3, 4 and 6 are the inventive examples. Example 1 is a comparative example and is a prior art foam-forming composition that has been used to produce a foam target backing. Examples 2 and 5 are also comparative examples. As is apparent, foams of Example 3 exhibited a lower pull force than foams of Example 1, the control, while the pull force for foams of Examples 4 and 6 exhibited pull forces both higher and lower than Example 1, depending on the probe used for the test.

**Table 1**

| | Example 1 | Example 2 | Example 3 | Example 4 | Example 5 | Example 6 |
|---|---|---|---|---|---|---|
| POLYOL 1 | 83.1 | 83.1 | 83.1 | 83.1 | 83.1 | 84.6 |
| POLYOL 2 | 4.2 | 4.2 | 4.2 | 4.2 | 4.2 | 4.2 |
| POLYOL 3 | 7.7 | 7.7 | 7.7 | 7.7 | 7.7 | 7.7 |
| PARTICLES 1 | 3.0 | -- | -- | -- | -- | -- |
| PARTICLES 2 | -- | 3.0 | -- | -- | -- | -- |
| PARTICLES 3 | -- | -- | 3.0 | -- | -- | 1.5 |
| PARTICLES 4 | -- | -- | -- | 3.0 | -- | -- |
| PARTICLES 5 | -- | -- | -- | -- | 3.0 | -- |
| CATALYST 1 | 0.6 | 0.6 | 0.6 | 0.6 | 0.6 | 0.6 |
| CATALYST 2 | 0.007 | 0.007 | 0.007 | 0.007 | 0.007 | 0.007 |
| COLORANT | 0.5 | 0.5 | 0.5 | 0.5 | 0.5 | 0.5 |
| WATER | 0.85 | 0.85 | 0.85 | 0.85 | 0.85 | 0.85 |
| ISOCYANATE | 54.6 | 54.6 | 54.6 | 54.6 | 54.6 | 54.6 |
| Isocyanate Index | 100 | 100 | 100 | 100 | 100 | 100 |

| RESULTS | | | | | | |
|---|---|---|---|---|---|---|
| Apparent Density, pcf | 11.0 | 11.2 | 11.1 | 11.1 | 11.0 | 10.9 |
| Pull Force - stainless steel (lbf) | 21.78 | 28.14 | 20.35 | 28.26 | 28.45 | 26.52 |
| Pull Force - carbon fiber arrow (lbf) | 21.61 | 16.37 | 18.27 | 15.27 | 23.41 | 17.88 |

Although the invention has been described in detail in the foregoing for the purpose of illustration, it is to be understood that such detail is solely for that purpose and that variations can be made therein by those skilled in the art without departing from the spirit and scope of the invention except as it may be limited by the claims.

## Claims

1. An isocyanate-reactive composition comprising:
(a) a polyether polyol having a functionality of 2 to 8, an OH number of 20 to 400 mg KOH/g, and a poly(oxyethylene) content of 0 to 50% by weight, based on total weight of the polyether polyol (a);
(b) particles dispersed in the polyether polyol, the particles comprising:
(i) polymeric particles, and
(ii) polymer-ceramic composite particles; and
(c) water,
with the proviso that the isocyanate-reactive composition does not include any fluoropolymer.

2. The isocyanate-reactive composition of claim 1, wherein the polyether polyol (a) has a functionality of 2 to 4, an OH number of 20 to 50 mg KOH/g, and a poly(oxyethylene) content of 1 to 30% by weight and is present in an amount of at least 50% by weight, based on total weight of polyol present in the isocyanate-reactive composition.

3. The isocyanate-reactive composition of claim 1 or claim 2, wherein the polymeric particles are a reaction product of an ethylenically unsaturated monomer composition comprising styrene and acrylonitrile.

4. The isocyanate-reactive composition of one of claim 1 to claim 3, wherein the polymeric particles are present in an amount of 10% by weight to 30% by weight, based on total weight of the isocyanate-reactive composition, and the polymer-ceramic composite particles are present in an amount of 2 to 4% by weight, based on total weight of the isocyanate-reactive composition.

5. The isocyanate-reactive composition of one of claim 1 to claim 4, further comprising a polyether polyol (b) having a functionality of 2 to 6, an OH number of 20 to 120 mg KOH/g, and a poly(oxyethylene) content of at least 60% by weight, based on total weight of the polyether polyol.

6. The isocyanate-reactive composition of claim 5, wherein polyether polyol (b) is present in an amount of 1 to 10% by weight, based on total weight of polyol present in the isocyanate-reactive composition.

7. The isocyanate-reactive composition of one of claim 1 to claim 6, further comprising a diol chain-extender having a molecular weight of less than 300 Da, which is present in an amount of 5 to 15% by weight, based total weight of polyol present in the isocyanate-reactive composition.

8. A foam-forming composition comprising: (i) the isocyanate-reactive composition of one of claim 1 to claim 7; and (ii) a polyisocyanate, wherein the polyisocyanate and the isocyanate-reactive composition are present at an isocyanate index of 40 to 60.

9. A target comprising:
(a) a cover having target markings formed thereon; and
(b) a foam core that is enclosed by the cover,
wherein the foam core comprises:
(i) polymeric particles; and
(ii) polymer-ceramic composite particles, and
with the proviso that the foam core does not include any fluoropolymer.

10. The target of claim 9, wherein the polymeric particles are a reaction product of an ethylenically unsaturated monomer composition comprising styrene and acrylonitrile.

11. The target of claim 9 or claim 10, wherein the foam core is a polyurethane foam that is a reaction product of a foam-forming composition comprising: (i) an isocyanate-reactive composition; and (ii) a polyisocyanate, wherein the polyisocyanate and the isocyanate-reactive composition are present at an isocyanate index of 40 to 60.

12. The target of claim 11, wherein the isocyanate-reactive composition comprises: (a) a polyether polyol having a functionality of 2 to 8, an OH number of 20 to 400 mg KOH/g, and a poly(oxyethylene) content of 0 to 50% by weight, based on total weight of polyether polyol (a); (b) particles dispersed in the polyether polyol, the particles comprising: (i) the polymeric particles, and (ii) the polymer-ceramic composite particles; and (c) water, with the proviso that the isocyanate-reactive composition does not include any fluoropolymer.

13. The target of claim 12, wherein polyether polyol (a) has a functionality of 2 to 4, an OH number of 20 to 50 mg KOH/g, and a poly(oxyethylene) content of 1 to 30% by weight, wherein the polyether polyol (a) is present in an amount of at least 50% by weight, based on total weight of polyol present in the isocyanate-reactive composition.

14. The target of one of claim 11 to claim 13, wherein the polymeric particles are present in an amount of 10% by weight to 30% by weight, based on total weight of the isocyanate-reactive composition and the polymer-ceramic composite particles are present in an amount of 2 to 4% by weight, based on total weight of the isocyanate-reactive composition.

15. The target of one of claim 12 to claim 14, wherein the isocyanate-reactive composition further comprises a polyether polyol (b) having a functionality of 2 to 6, an OH number of 20 to 120 mg KOH/g, and a poly(oxyethylene) content of at least 60% by weight, based on total weight of polyether polyol (b), wherein polyether polyol (b) is present in an amount of 1 to 10% by weight, based on total weight of polyol present in the isocyanate-reactive composition.
